# EUROPEAN PATENT SPECIFICATION

(11) **EP 3 749 057 B1**
(45) Date of publication and mention of the grant of the patent: **22.12.2021**
(21) Application number: 20174742.5
(22) Date of filing: 14.05.2020
(51) Int. Cl.: H05B 6/12, A47J 43/046

(54) **KITCHEN APPLIANCE WITH STIRRING DEVICE**
KÜCHENGERÄT MIT RÜHRVORRICHTUNG
APPAREIL DE CUISINE DOTÉ D'UN DISPOSITIF D'AGITATION

(30) Priority: 03.06.2019 EP 19177839
(43) Date of publication of application: 09.12.2020
(73) Proprietor: Krauße, Constantin, 90431 Nürnberg (DE)
(72) Inventor: Krauße, Constantin, 90431 Nürnberg (DE)
(74) Representative: Dr. Gassner & Partner mbB

(56) References cited:
- EP-A1- 2 583 749
- EP-A1- 2 886 026
- WO-A1-2016/185304
- JP-A- H06 269 367

## Description

The invention relates to a kitchen appliance comprising a cooktop for placing cookware with ferromagnetic base, an induction coil for heating the base of the cookware, a spinner with at least one magnet to be inserted into the cookware, and a rotating magnetic field generator for driving the spinner.

The document EP 2 886 026 A1 discloses a magnetic stirrer heater propelled by coils and heated by an induction coil. The magnetic stirrer heater is propelled using closed magnetic flux between the coils and the magnetic stirrer heater, respectively.

It is also known from the prior art to heat cookware by means of electromagnetic induction. Such cookware requires a ferromagnetic base, which is heated directly using induction coils.

It has been turned out that the magnetic heater stirrer according to EP 2 886 026 A1 is incompatible with cookware having a ferromagnetic base because of the ferromagnetic base being arranged between the coils and the magnetic stirrer heater. This is mainly due to two independent effects, namely magnetic attraction between the magnetic stirrer heater and the ferromagnetic base and interruption of magnetic flux between the coils and the magnetic stirrer heater. WO2016/185304 A1 discloses a kitchen appliance according to the preamble of claim 1.

The problem to be solved is to provide for automatic or automatable stirring during cooking using cookware with a ferromagnetic base.

According to the invention, this problem is solved by a kitchen appliance according to claim 1. Further developments of the invention are given in the dependent claims.

In particular, the invention provides for a kitchen appliance comprising a cooktop for placing cookware with ferromagnetic base, an induction coil for heating the base of the cookware, a spinner with at least one magnet to be inserted into the cookware, and a rotating magnetic field generator for driving the spinner, which is characterized in that the field generator and the magnet of the spinner are arranged in repelling magnetic field configuration with respect to each other.

It is an object of the invention that the repelling magnetic configuration allows for magnetic interaction between the spinner and the field generator, respectively, despite the ferromagnetic base placed in between.

It is another object of the invention that the repelling magnetic configuration counteracts magnetic attraction between the spinner and the ferromagnetic base, respectively, and therefore reduces friction between the spinner and the cookware.

In order to further reduce friction, the spinner preferably has a bottom with a low-friction contour and/or with a low-friction material.

A low friction contour may for instance comprise reduced contact areas of the spinner to the cooktop base such as dot-shaped or line-shaped structures.

In some embodiments of the invention, the bottom of the spinner is made of low-friction material, for instance chosen from a wide range of FDA approved plastics readily available.

In other embodiments, the bottom of the spinner is coated with a low-friction material such as Polytetrafluoroethylene, also known by the brand name Teflon.

A repelling magnetic configuration is easily achievable when a magnetic axis of the spinner and/or of the magnetic field generator, respectively, is arranged essentially vertically.

It is a particular advantage of vertical magnetic axes that the repelling magnetic configuration of spinner and field generator is easily maintained throughout the rotation.

In some embodiments of the invention, the magnetic field generator comprises at least one magnet and a motor for rotating the magnet.

The magnet may be an electromagnet like a coil or solenoid, so that the rotating magnetic field can be switched off when not in use. However, this required more complex construction to power the rotating electromagnet. It is therefore easier, cheaper and more robust when the magnet of the magnetic field generator is a permanent magnet.

In order to increase the torque or momentum to be transferable to the spinner, it is preferred that the magnet of the magnetic field generator is arranged off-axis with respect to the rotation axis.

In other embodiments of the invention, the magnetic field generator comprises a number of coils, in particular of solenoids, arranged in a circle and a control unit for the coils designed and arranged for generating a modulated magnetic field running around said circle.

For space constraints, the magnetic field generator is best arranged underneath the cooktop together with the induction coil.

In repelling magnetic configuration of stirrer and field generator, respectively, the torque or momentum transferable to the stirrer sensitively depends on the distance. It is therefore beneficial when the magnetic field generator is arranged as close to the cooktop as possible, in particular at least partially at the same level as the induction coil or between the induction coil and the cooktop.

In some embodiments, the induction coil and the field generator are arranged concentrically at equal level or height or distance to the cooktop. This allows for minimum distance and best efficiency of both heating and stirring functionality.

However, area directly underneath the cooktop is sparse and concentric arrangement limits the size of the induction coil. In order to accommodate larger induction coils, the coil or coils are preferably arranged below the field generator.

In some embodiments of the invention, the magnet of the spinner and/or of the magnetic field generator, respectively, has wedge shaped or triangular shaped pole surfaces. This shape facilitates self-centring of the spinner within the rotating magnetic field of the field generator despite the repelling magnetic configuration and avoids lateral breaking-away of the spinner.

Another way to keep the spinner in alignment with the field generator, which might be applied additionally or alternatively to the shape of the magnetic poles, is a diameter of the magnetic field generator to be larger than a diameter of the spinner.

In a preferred embodiment of the invention, the spinner has a structured top for avoiding misalignment inside the cookware. In particular, a structured top may be designed to avoid flip-over of the spinner inside the cookware.

For instance, to top of the spinner or an envelope of the structured to may be rounded or dome-shaped or conical or frustoconical.

In order to facilitate the stirring performance, the structured top of the spinner may comprise stirring blades or similar structures.

Subsequently, the invention will further be described on the basis of one example shown in the drawings, wherein
- Fig. 1: schematically shows an exemplary kitchen appliance according to the invention together with a cooking pot and
- Fig. 2: schematically shows a detail of the magnetic system of the exemplary kitchen appliance of Fig. 1.

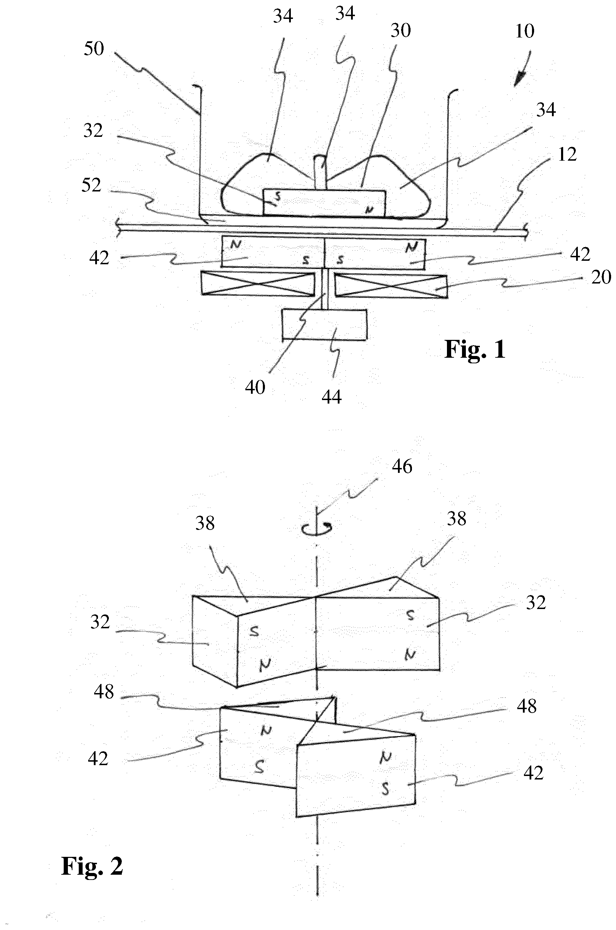

Figure 1 shows a schematic side view of an exemplary kitchen appliance 10 according to the invention together with a cooking pot 50, which does not belong to the invention itself. The kitchen appliance 10 comprises a cooktop 12 for the cooking pot 50, an induction coil 20 for heating the ferromagnetic base 52 of the cooking pot 50, a spinner 30 to be placed inside the cooking pot 50, and a rotating magnetic field generator 40 for driving the spinner 30.

The spinner 30 comprises magnets 32, which are interacting with magnets 42 of the field generator 40. A three-dimensional schematic view of the magnets 32, 42 only is shown in Fig. 2 for illustration of the magnetic configuration of the kitchen appliance 10 according to the invention.

The magnets 32 of the spinner 30 are embeded into a body made for instance of food-safe plastic. The top side of the spinner 30 comprises several stirring blades 34, which facilitate stirring of the food cooking inside the pot 50 when the spinner 30 is spinning or rotating. At the same time, stirring blades 34 have a frustoconical envelope and round-off edges to secure that the spinner 30 always falls with the magnets 32 down inside the pot 50.

In the embodiment of the invention shown in the figures, the spinner 30 has two magnets 32. A different number, such as three or four or more, is also possible.

The field generator 40 comprises permanent magnets 42 coupled to a motor 44 for rotating the magnets 42 around a vertical axis of rotation 46. By rotating the magnets 42, a rotating magnetic field is generated.

Different devices and mechanisms for generating a rotating magnetic field are possible within the scope of the invention. For instance, a field generator 40 may comprise a set of solenoidal coils arranged in a circle, wherein the coils are controlled to generate a magnetic field modulation propagating along said circle.

The magnets 42 of the field generator 40 and the magnets 32 of the spinner 30 are arranged in repelling configuration with respect to each other. In the embodiment shown in the figures, this is achieved by arranging the magnets 32, 42 to face each other with equal poles, for instance their respective north poles N.

Due to the repelling configuration, the free spinner 30 will find an orientation inside the pot 50 where the magnets 32 are offset by 90° to the magnets 42 of the field generator 40. This angle will, inter alia, depend on the number of magnets 32, 42. For instance, in embodiments with three equally spaced magnets 32 of the spinner 30 and matching arrangement of magnets 42 of the field generator 40, the offset angle will be around 60°.

Rotating the magnets 42 of the field generator 40 by means of the motor 40 will now cause the magnets 32 of the spinner 30 to follow the rotational movement, resulting in the spinner 30 to spin inside the pot 50.

Lateral displacement of the spinner 30, i.e. movement away from the rotational axis 46, is prevented by triangular or wedge-shaped pole surfaces 38, 48 of the magnets 32, 42, respectively.

Other configurations for caging the spinner 30 centrally to the field generator 40 are possible as well within the scope of the invention. For instance, the magnets 42 of the field generator can be made larger and/or rotated along a larger diameter than the magnets 32 of the spinner 30.

The strength of magnetic coupling between the magnets 32 of the spinner 30 and the magnets 42 of the field generator 40 strongly depends on the distance between the magnets 32, 42, in particular because of the ferromagnetic base 52 placed in between. It is therefore beneficial to have the magnets 42 of the field generator 40 arranged as close to the cooktop 12 as possible. In order to allow for short distance between the induction coil 20 and the pot base 52, which facilitates efficiency of the heating process, the motor 44 of the field generator 40 is placed below the induction coil 20 and coupled to the magnets 42 by a drive shaft running through the core of the induction coil 20.

### References

- 10: kitchen appliance
- 12: cooktop
- 20: induction coil
- 30: spinner
- 32: permanent magnet
- 34: stirring blade
- 38: pole surface
- 40: field generator
- 42: permanent magnet
- 44: motor
- 46: axis of rotation
- 48: pole surface
- 50: cooking pot
- 52: ferromagnetic base
- N: magnetic north
- S: magnetic south

## Claims

1. Kitchen appliance (10) comprising a cooktop (12) for placing cookware (50) with ferromagnetic base (52), an induction coil (20) arranged underneath the cooktop (12) for heating the base (12) of the cookware (50), a spinner (30) with at least one magnet (32) to be inserted into the cookware (50), and a rotating magnetic field generator (40) for driving the spinner (30),
**characterized in that**
the field generator (40) and the magnet (32) of the spinner (30) are arranged in repelling magnetic field configuration with respect to each other.

2. Kitchen appliance (10) according to claim 1,
**characterized in that**
the spinner (30) has a bottom with a low-friction contour and/or with a low-friction material.

3. Kitchen appliance (10) according to claim 1 or 2,
**characterized in that**
a magnetic axis of the spinner (30) and/or of the magnetic field generator (40), respectively, is arranged essentially vertically.

4. Kitchen appliance (10) according to any one of claims 1 to 3,
**characterized in that**
the magnetic field generator (40) comprises at least one magnet (42), in particular a permanent magnet (42), and a motor (44) for rotating the magnet (42).

5. Kitchen appliance (10) according to claim 4,
**characterized in that**
the magnet (42) of the magnetic field generator (40) is arranged off-axis with respect to the rotation axis (46).

6. Kitchen appliance (10) according to any one of claims 1 to 3,
**characterized in that**
the magnetic field generator (40) comprises a number of coils, in particular of solenoids, arranged in a circle and a control unit for the coils designed and arranged for generating a modulated magnetic field running around said circle.

7. Kitchen appliance (10) according to any one of claims 1 to 6,
**characterized in that**
the magnetic field generator (40) is at least partially arranged underneath the cooktop (12), preferably at the same level as the induction coil (20) or between the induction coil (20) and the cooktop (12).

8. Kitchen appliance (10) according to any one of claims 1 to 7,
**characterized in that**
the magnet of the spinner (30) and/or of the magnetic field generator (40), respectively, has wedge shaped or triangular shaped pole surfaces (38, 48).

9. Kitchen appliance (10) according to any on of claims 1 to 8,
**characterized in that**
a diameter of the magnetic field generator (40) is larger than a diameter of the spinner (30).

10. Kitchen appliance (10) according to any one of claims 1 to 9,
**characterized in that**
the spinner (30) has a structured top for avoiding misalignment inside the cookware (50).

11. Kitchen appliance (10) according to claim 10,
**characterized in that**
the structured top of the spinner (30) comprises stirring blades (34).

## Patentansprüche

1. Küchengerät (10) umfassend einem Kochfeld (12) zum Aufstellen von Kochgeschirr (50) mit ferromagnetischem Boden (52), einer unterhalb des Kochfeldes (12) angeordneten Induktionsspule (20) zum Erwärmen des Bodens (12) des Kochgeschirrs (50), ein in das Kochgeschirr (50) einzusetzendes Drehelement (30) mit mindestens einem Magneten (32) und einen Generator (40) eines rotierenden Magnetfeldes zum Antrieb des Drehelements (30),
**dadurch gekennzeichnet, dass**
der Feldgenerator (40) und der Magnet (32) des Drehelements (30) in abstoßender Magnetfeldkonfiguration zueinander angeordnet sind.

2. Küchengerät (10) nach Anspruch 1,
**dadurch gekennzeichnet, dass**
das Drehelement (30) eine Unterseite mit einer reibungsarmen Kontur und/oder mit einem reibungsarmen Material aufweist.

3. Küchengerät (10) nach Anspruch 1 oder 2,
**dadurch gekennzeichnet, dass**
eine magnetische Achse des Drehelements (30) und/oder des Magnetfeldgenerators (40) jeweils im Wesentlichen vertikal angeordnet ist.

4. Küchengerät (10) nach einem der Ansprüche 1 bis 3,
**dadurch gekennzeichnet, dass**
der Magnetfeldgenerator (40) mindestens einen Magneten (42), insbesondere einen Permanentmagneten (42), und einen Motor (44) zum Drehen des Magneten (42) umfasst.

5. Küchengerät (10) nach Anspruch 4,
**dadurch gekennzeichnet, dass**
der Magnet (42) des Magnetfeldgenerators (40) außerhalb der Achse in Bezug auf die Drehachse (46) angeordnet ist.

6. Küchengerät (10) nach einem der Ansprüche 1 bis 3,
**dadurch gekennzeichnet, dass**
der Magnetfeldgenerator (40) eine Anzahl von in einem Kreis angeordneten Spulen, insbesondere von Solenoiden, und eine Steuereinheit für die Spulen umfasst, die zur Erzeugung eines modulierten, um den Kreis verlaufenden Magnetfeldes ausgelegt und angeordnet sind.

7. Küchengerät (10) nach einem der Ansprüche 1 bis 6,
**dadurch gekennzeichnet, dass**
der Magnetfeldgenerator (40) zumindest teilweise unterhalb des Kochfeldes (12), vorzugsweise auf gleicher Höhe mit der Induktionsspule (20) oder zwischen der Induktionsspule (20) und dem Kochfeld (12), angeordnet ist.

8. Küchengerät (10) nach einem der Ansprüche 1 bis 7,
**dadurch gekennzeichnet, dass**
der Magnet des Drehelements (30) und/oder des Magnetfeldgenerators (40) jeweils keilförmige oder dreieckförmige Polflächen (38, 48) aufweist.

9. Küchengerät (10) nach einem der Ansprüche 1 bis 8,
**dadurch gekennzeichnet, dass**
ein Durchmesser des Magnetfeldgenerators (40) größer ist als ein Durchmesser des Drehelements (30).

10. Küchengerät (10) nach einem der Ansprüche 1 bis 9,
**dadurch gekennzeichnet, dass**
das Drehelement (30) eine strukturierte Oberseite zur Vermeidung einer Fehlausrichtung im Inneren des Kochgeschirrs (50) aufweist.

11. Küchengerät (10) nach Anspruch 10,
**dadurch gekennzeichnet, dass**
die strukturierte Oberseite des Drehelements (30) Rührflügel (34) umfasst.

## Revendications

1. Appareil de cuisine (10) comprenant une table de cuisson (12) pour placer une batterie de cuisine (50) avec une base ferromagnétique (52), une bobine d'induction (20) agencée en dessous de la table de cuisson (12) pour chauffer la base (12) de la batterie de cuisine (50), un élément rotatif (30) avec au moins un aimant (32) devant être insérée dans la batterie de cuisine (50), et un générateur de champ magnétique rotatif (40) pour entraîner l'élément rotatif (30),
**caractérisé en ce que**
le générateur de champ (40) et l'aimant (32) de l'élément rotatif (30) sont agencés dans une configuration de champs magnétiques repoussants l'un par rapport à l'autre.

2. Appareil de cuisine (10) selon la revendication 1,
**caractérisé en ce que**
l'élément rotatif (30) a un fond avec un contour à faible friction et/ou avec un matériau à faible friction.

3. Appareil de cuisine (10) selon la revendication 1 ou 2,
**caractérisé en ce que**
un axe magnétique de l'élément rotatif (30) et/ou du générateur de champ magnétique (40), respectivement, est agencé essentiellement verticalement.

4. Appareil de cuisine (10) selon l'une quelconque des revendications 1 à 3,
**caractérisé en ce que**
le générateur de champ magnétique (40) comprend au moins un aimant (42), notamment un aimant (42) permanent, et un moteur (44) pour faire tourner l'aimant (42).

5. Appareil de cuisine (10) selon la revendication 4,
**caractérisé en ce que**
l'aimant (42) du générateur de champ magnétique (40) est agencé de manière désaxée par rapport à l'axe de rotation (46).

6. Appareil de cuisine (10) selon l'une quelconque des revendications 1 à 3,
**caractérisé en ce que**
le générateur de champ magnétique (40) comprend un certain nombre de bobines, notamment de solénoïdes, agencées en un cercle et un module de commande pour les bobines conçu et agencé pour générer un champ magnétique modulé courant autour dudit cercle.

7. Appareil de cuisine (10) selon l'une quelconque des revendications 1 à 6,
**caractérisé en ce que**
le générateur de champ magnétique (40) est au moins partiellement agencé en dessous de la table de cuisson (12), de préférence au même niveau que la bobine d'induction (20) ou entre la bobine d'induction (20) et la table de cuisson (12).

8. Appareil de cuisine (10) selon l'une quelconque des revendications 1 à 7,
**caractérisé en ce que**
l'aimant de l'élément rotatif (30) et/ou du générateur de champ magnétique (40), respectivement, a des surfaces polaires (38, 48) en forme de coin ou de forme triangulaire.

9. Appareil de cuisine (10) selon l'une quelconque des revendications 1 à 8,
**caractérisé en ce que**
un diamètre du générateur de champ magnétique (40) est supérieur à un diamètre de l'élément rotatif (30).

10. Appareil de cuisine (10) selon l'une quelconque des revendications 1 à 9,
**caractérisé en ce que**
l'élément rotatif (30) a un dessus structuré pour éviter un désalignement à l'intérieur de la batterie de cuisine (50).

11. Appareil de cuisine (10) selon la revendication 10,
**caractérisé en ce que**
le dessus structuré de l'élément rotatif (30) comprend des pales d'agitation (34).
